# EUROPEAN PATENT SPECIFICATION

(11) **EP 3 959 446 B1**
(45) Date of publication and mention of the grant of the patent: **07.01.2026**
(21) Application number: 20723499.8
(22) Date of filing: 24.04.2020
(51) Int. Cl.: F04C 18/02, F04C 29/00

(54) **SCROLL PUMP CRANK SLEEVE**
SCROLLPUMPENKURBELGEHÄUSE
MANCHON DE MANIVELLE DE POMPE À SPIRALES

(30) Priority: 26.04.2019 GB 201905833
(43) Date of publication of application: 02.03.2022
(73) Proprietor: Edwards Limited, Burgess Hill, Sussex RH15 9TW (GB)
(72) Inventor: HOLBROOK, Alan Ernest Kinnaird, Burgess Hill, Sussex RH15 9TW (GB); SCHOFIELD, Nigel Paul, Burgess Hill, Sussex RH15 9TW (GB); BEDWELL, David, Burgess Hill, Sussex RH15 9TW (GB)
(74) Representative: Totman, Clare Elizabeth
(86) International application number: PCT/GB2020/051019
(87) International publication number: WO 2020/217066

(56) References cited:
- EP-A1- 2 806 164
- EP-A2- 2 594 797
- WO-A1-2013/015072
- JP-A- 2018 131 919
- US-A1- 2007 231 175
- US-A1- 2010 172 781
- US-A1- 2015 118 089
- US-A1- 2015 322 947

## Description

### Field of the Invention

The present invention relates to scroll pumps, in particular vacuum scroll pumps, and specifically crank sleeves for scroll pumps.

### Background to the Invention

Known scroll compressors, or pumps, comprise a fixed scroll, an orbiting scroll and a drive mechanism for the orbiting scroll. The drive mechanism is configured to cause the orbiting scroll to orbit relative to the fixed scroll to cause pumping of a fluid between a pump inlet and a pump outlet. The fixed and orbiting scrolls each comprise an upstanding scroll wall extending from a generally circular base plate. Each scroll wall has an end, or tip, face disposed remote from and extending generally perpendicular to the respective base plate. The orbiting scroll wall is configured to mesh with the fixed scroll wall during orbiting of the orbiting scroll so that the relative orbital motion of the scrolls causes successive volumes of gas to be enclosed in pockets defined between the scroll walls and pumped from the inlet to the outlet.

A rotary machine with an attached eccentric mass will have unbalanced internal loads. Accordingly, scroll pumps are inherently unbalanced. Unbalanced internal loads may be reduced or cancelled by a counterbalance mechanism. In the case of scroll pumps, the mass of the orbiting scroll creates an unbalance force in the direction of the crank offset. Consequently, a counterbalance may be added in the opposite direction to reduce the vibration level of the pump.

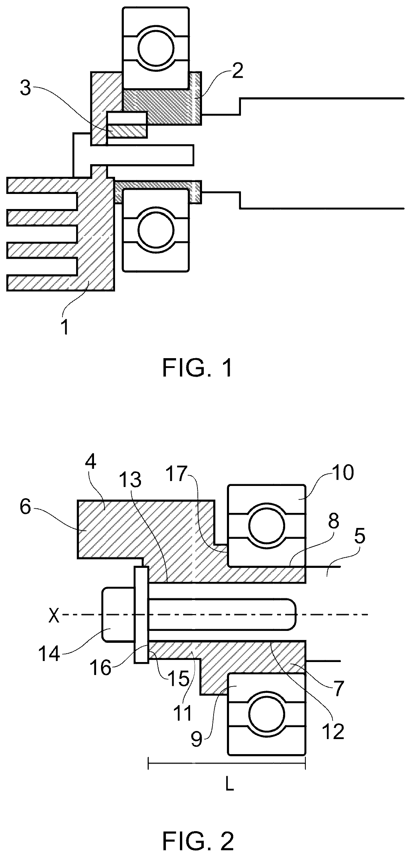

Referring to Figure 1, which shows a known crank sleeve *in situ,* the conventional approach to balancing scroll pumps is to use a separate counterbalance (1) in conjunction with a crank sleeve (2). A crank sleeve (2) is an eccentric member with a centre of rotation offset to the centre of rotation of the drive shaft; thereby providing the crank offset. The crank offset imparts an orbital path on the orbital scroll of the scroll pump. In known systems, a key (3) or pin is required to align the counterbalance (1) opposite to the crank offset.

There is, however, an ongoing need for improved scroll pumps and, in particular, a need for components that aid the manufacture and/or allow for the miniaturisation of scroll pumps for certain applications. The invention addresses, at least to an extent, these and other issues with known scroll pumps and crank sleeves.

EP2806164A describes a scroll compressor in which an eccentric bearing is connected to a drive shaft by an eccentric pin. A counterweight is connected to the eccentric bearing to compensate for imbalance caused by orbiting movement of the orbiting scroll.

US2010/172781 describes a scroll compressor in which a crank pin is eccentrically located on an end of a drive shaft and connected to an orbiting scroll by an eccentric bush.

EP 2594797A and US 2015/118089 also describe a scroll compressor in which a crank pin is eccentrically located on an end of a drive shaft and connected to an orbiting scroll by a bush.

US 2007/231175 describes a scroll compressor in which a driving bush is mounted eccentrically on to the end of a rotary shaft by an attachment bolt and a counterweight is connected to driving bush. An outer race of an orbit bearing is loosely fitted into a boss portion of the driving bush and an inner race of the bearing is fitted on to the orbiting scroll.

US 2015/322947 describes a scroll compressor in which an eccentric bushing is mounted on the end of a fixed shaft. A counterweight is connected to the eccentric bushing. A radial bearing is located between the bushing and the orbiting scroll.

WO 2013/015072 also describes a scroll compressor in which an eccentric bushing is mounted on the end of a fixed shaft. A counterweight is connected to the eccentric bushing. A tapered roller bearing is located between the bushing and the orbiting scroll.

JP 2018131919 A describes a scroll compressor in which an eccentric bushing integrally formed with a counterweight is mounted between a shaft and an orbiting scroll. However, a crank pin is eccentrically located on an end of a rotating drive shaft, which rotating drive shaft has the axis of rotation, and the rotating drive shaft is connected to the eccentric bushing via the eccentrically located crank pin.

### Summary of the Invention

The present invention provides a scroll pump comprising an orbiting scroll, a fixed scroll, a drive shaft having an axis of rotation and a crank sleeve, said crank sleeve comprising a first portion in the form of an eccentric member having a conduit which receives the drive shaft having the axis of rotation and said crank sleeve comprising a longitudinal axis which is radially offset from the axis of rotation of the drive shaft to provide a crank offset extending in a radial direction between the longitudinal axis of the crank sleeve and the axis of rotation of the drive shaft which imparts an orbital path on the orbital scroll, said crank sleeve further comprising an integrally formed counterbalance for reducing pump vibration extending radially in a direction substantially opposite to the crank offset, characterised in that the first portion of the crank sleeve has an external surface coupled to the inner race of a rolling element bearing unit, the outer race of the bearing unit being coupled to the orbiting scroll, and the crank sleeve biases the bearing unit towards the fixed scroll.

Advantageously, crank sleeves according to the invention may provide intrinsic alignment of the orbiting mass and the counterbalance. They further remove the need for a key or pin, reducing the number of parts, from three or more to one, and simplify manufacture.

The crank sleeve comprises a first portion which is eccentric and, in use, provides the crank offset. The first portion is coupled to the bearing unit. In this regard, the first portion may preferably have an outer surface which directly engages the bearing unit; typically, by means of an interference fit. The extent of the first portion may be defined by the portion of the crank sleeve, in use, surrounded by or coupled to the bearing unit. Typically, the crank sleeve comprises a second portion which is defined by the distally extending remainder of the crank sleeve, including the counterbalance. An optional third portion may include a proximally extending remainder of the crank sleeve.

The crank sleeve comprises a conduit for receiving the drive shaft of the scroll pump. The conduit may extend further in a longitudinal direction than the first portion of the sleeve, preferably further in a distal direction. Typically, the conduit extends through, or is defined by, both the first portion and second portion of the crank sleeve. In embodiments the ratio of the length of the conduit defined by the first portion of the crank sleeve to the full length of the conduit is from about 1:1.3 to about 1:3, preferably from about 1:1.5 to about 1:2.5, about 1:2 being an example.

Advantageously, such crank sleeves may be more stably attached to the drive shaft, reducing tolerances and improving pump performance, whilst still affording the aforementioned reduction in part count and simplification of manufacture.

Unless stated otherwise, for the purpose of the invention, axial and longitudinal directions relate to a direction substantially parallel to the axis of rotation of the crank sleeve and/or drive shaft of the pump. Radially refers to a direction extending out from the axis of rotation of the sleeve and/or drive shaft in direction transverse to the longitudinal direction.

Preferably, the rolling elements are balls. The portion of the crank sleeve providing the crank offset has an external surface coupled to the inner race of the rolling element bearing, preferably directly engaged with the inner race of the rolling element bearing. The outer race of the rolling element rotor bearing is coupled to the orbiting scroll. Thus, the crank offset is transmitted to the orbiting scroll via the rolling element bearing.

Preferably the crank sleeve is machined from a single piece of material, typically a metallic substrate. Preferred alloys may include steels, in particular mild steel and stainless steel. It will be appreciated that the user may select an appropriate material, in particular a preferred grade of steel, depending on the application requirements.

The scroll pump may be a dry pump in which the scrolls are not lubricated.

Orbiting scroll refers to the scroll that orbits during use of the scroll. It will be appreciated that the orbiting scroll may itself be stationary when the pump is not in use. Preferably, the crank sleeve is fixed to the drive shaft using a selectively reversible fixation. Typically, the selectively reversible fixation is an orbiting scroll bias which biases the orbiting scroll in a fixed scroll direction.

### Brief Description of the Figures

In the following disclosure, which is given by way of example only, reference will be made to the drawings, in which:
Figure 1 is a schematic representation of a prior art scroll pump crank sleeve and counterbalance; and
Figure 2 is a schematic representation of a crank sleeve according to the invention.

### Detailed Description of the Invention

The present invention provides a crank sleeve for a scroll pump, preferably a vacuum scroll pump.

Referring to Figure 2, the illustrated crank sleeve (4) is an eccentric member with a centre of rotation parallel to, but radially offset from, the axis of rotation (X) of the drive shaft (5). The eccentricity of the crank sleeve (4) provides a crank offset which, in use, imparts an orbital path on the orbital scroll of the scroll pump (not shown). The crank offset extends in a first radial direction substantially perpendicular to the axis of rotation of the drive shaft (5) and/or the crank sleeve (4).

The illustrated crank sleeve (4) further comprises an integrally formed counterbalance (6) for reducing pump vibration. The counterbalance (6) extends radially in a direction substantially opposite to the crank offset. The counterbalance (6) typically extends further radially than the crank offset. The mass and geometry of the counterbalance (6) will be determined by the mass and geometry of the orbiting scroll and the extent of the crank offset.

Advantageously, the illustrated crank sleeve (4) removes the need for a key and provides intrinsic alignment of the orbiting mass and the counterbalance, reducing the number of parts and easing manufacture.

The illustrated crank sleeve (4) comprises a first portion (7) defined by an outer surface (8) which engages the inner race (9) of the bearing unit (10). A second portion (11) is defined by the distally extending remainder of the crank sleeve (4), including the counterbalance (6). The first portion (7) is eccentric and provides the crank offset. The first (7) and second (11) portions are integrally formed. The illustrated crank sleeve (4) is made (e.g. machined) from a single piece of material, in this instance mild steel. Typically, the crank sleeve (4) is formed by machining.

As illustrated, the crank sleeve (4) comprises a conduit (13) for receiving the drive shaft (5) of the scroll pump. The conduit comprises an inner surface (12) which, in use, engages an outer surface of the drive shaft (5). Typically, the inner surface (12) of the conduit is configured to circumferentially engage with the outer surface of the drive shaft (5) along substantially the entire length (L) of the conduit (13).

An axial thrust is provided to the crank sleeve (4) by an orbiting scroll biaser (14). The scroll biaser (14) is located at a distal end of the drive shaft (5). The thrust provided by the biaser (14) may be varied to ensure an adequate seal is obtained without damaging the scroll components.

The illustrated orbiting scroll biaser (14) comprises an abutment surface (15) which engages the crank sleeve (4). The abutment surface (15) of the orbiting scroll biaser (14) extends in a plane transverse to the axis of rotation of the drive shaft (5) and engages with an abutment surface (16) provided on the crank sleeve (4). The abutment surface (16) of the crank sleeve is substantially parallel to the abutment surface (15) of the orbiting scroll biaser (14). The illustrated crank sleeve abutment surface (16) is located in the second portion (11) of the crank sleeve (4). The axial thrust provided by the orbiting scroll biaser (14) is arranged to securely push the orbiting scroll into contact with the fixed scroll.

The crank sleeve (4) transmits the axial thrust to the orbiting scroll via the bearing unit (10). In this regard, the crank sleeve (4) comprises a second abutment surface (17) extending transverse to its axis of rotation, which, in use, engages a bearing unit (10). The second abutment surface (17) is typically located in the second portion (11) of the crank sleeve (4).

The force exerted by the orbiting scroll biaser (14) should be sufficient to overcome the pressure loads generated in use of the scroll pump that will tend to force the fixed and orbiting scroll apart. The force provided by the orbiting scroll biaser (14) should be sufficient to balance this pressure loading and cause sufficient engagement between the base and opposed tip faces of the scrolls to provide a reliable seal.

The crank sleeve (4) is configured to reversibly couple to the drive shaft (5) and bearing unit (10), for instance using an interference fit. In the illustrated example, the bearing unit (10) is a ball bearing.

### Reference Numeral Key

1. Counterbalance (Prior Art)
2. Crank Sleeve (Prior Art)
3. Key (Prior Art)
4. Crank Sleeve
5. Drive Shaft
6. Counterbalance
7. First Portion
8. Outer Surface
9. Inner Race
10. Bearing Unit
11. Second Portion
12. Inner Surface
13. Conduit
14. Scroll Biaser
15. Scroll Biaser Abutment Surface
16. Crank Sleeve First Abutment Surface
17. Crank Sleeve Second Abutment Surface

## Claims

1. A scroll pump comprising an orbiting scroll, a fixed scroll, a drive shaft (5) having an axis of rotation (X) and a crank sleeve (4) , said crank sleeve (4) comprising a first portion (7) in the form of an eccentric member having a conduit (13) which receives the drive shaft having the axis of rotation (X) and said crank sleeve comprising a longitudinal axis which is radially offset from the axis of rotation (X) of the drive shaft (5) to provide a crank offset extending in a radial direction between the longitudinal axis of the crank sleeve and the axis of rotation of the drive shaft (5) which imparts an orbital path on the orbital scroll, said crank sleeve (4) further comprising an integrally formed counterbalance (6) for reducing pump vibration extending radially in a direction substantially opposite to the crank offset, **characterised in that** the first portion (7) of the crank sleeve (4) has an external surface coupled to the inner race of a rolling element bearing unit (10), the outer race of the bearing unit (10) being coupled to the orbiting scroll, the crank sleeve (4) biasing the bearing unit (10) towards the fixed scroll.

2. A scroll pump according to claim 1, wherein the crank sleeve (4) comprises a second portion (11), longitudinally offset from the first portion (7), which comprises the counter balance (6).

3. A scroll pump according to claim 1 or claim 2, wherein the conduit (13) has a length in longitudinal direction that is longer than the first portion (7).

4. A scroll pump according to any preceding claim, wherein the ratio of the length of the conduit (13) defined by the first portion (7) of the crank sleeve to the full length of the conduit is from about 1:1.3 to about 1:3, preferably from about 1:1.5 to about 1:2.5.

5. A scroll pump according to any preceding claim wherein the crank sleeve is machined from a single piece of material.

6. A scroll pump according to any preceding claim, wherein said drive shaft comprises a non-permanent fixation for attaching the crank sleeve to the drive shaft, said non-permanent fixation providing said bias to the bearing unit (10).

## Patentansprüche

1. Scrollpumpe, umfassend eine umlaufende Spirale, eine feste Spirale, eine Antriebswelle (5) mit einer Drehachse (X) und ein Kurbelgehäuse (4), wobei das Kurbelgehäuse (4) einen ersten Abschnitt (7) in der Form eines exzentrischen Elements mit einem Kanal (13), der die Antriebswelle mit der Drehachse (X) aufnimmt, umfasst, und das Kurbelgehäuse eine Längsachse umfasst, die zur Drehachse (X) der Antriebswelle (5) radial versetzt ist, um einen sich in einer radialen Richtung zwischen der Längsachse des Kurbelgehäuses und der Drehachse der Antriebswelle (5) erstreckenden Kurbelversatz bereitzustellen, der an der Orbitalspirale einen Orbitalpfad bildet, wobei das Kurbelgehäuse (4) ferner ein einstückig ausgebildetes Gegengewicht (6) zum Reduzieren von Pumpenvibration, das sich radial in einer dem Kurbelversatz im Wesentlichen entgegengesetzten Richtung erstreckt, umfasst, **dadurch gekennzeichnet, dass** der erste Abschnitt (7) des Kurbelgehäuses (4) eine mit dem inneren Laufring einer Rollenelementlagereinheit (10) gekoppelte Außenfläche aufweist, wobei der äußere Laufring der Lagereinheit (10) mit der umlaufenden Spirale gekoppelt ist, wobei das Kurbelgehäuse (4) die Lagereinheit (10) in Richtung der festen Spirale vorspannt.

2. Scrollpumpe nach Anspruch 1, wobei das Kurbelgehäuse (4) einen zweiten Abschnitt (11), vom ersten Abschnitt (7) längs versetzt, umfasst, der das Gegengewicht (6) umfasst.

3. Scrollpumpe nach Anspruch 1 oder Anspruch 2, wobei der Kanal (13) in Längsrichtung eine Länge aufweist, die länger als der erste Abschnitt (7) ist.

4. Scrollpumpe nach einem der vorhergehenden Ansprüche, wobei das Verhältnis des durch den ersten Abschnitt (7) des Kurbelgehäuses definierten Kanals (13) zur vollen Länge des Kanals von etwa 1:1,3 bis zu etwa 1:3, vorzugsweise von etwa 1:1,5 bis zu etwa 1:2,5, reicht.

5. Scrollpumpe nach einem der vorhergehenden Ansprüche, wobei das Kurbelgehäuse aus einem einzelnen Stück Material hergestellt ist.

6. Scrollpumpe nach einem der vorhergehenden Ansprüche, wobei die Antriebswelle eine nicht dauerhafte Befestigung zum Anbringen des Kurbelgehäuses an der Antriebswelle umfasst, wobei die nicht dauerhafte Befestigung der Lagereinheit (10) die Vorspannung bereitstellt.

## Revendications

1. Pompe à spirales comprenant une spirale orbitale, une spirale fixe, un arbre d'entraînement (5) comportant un axe de rotation (X) et un manchon de manivelle (4), ledit manchon de manivelle (4) comprenant une première partie (7) sous la forme d'un élément excentrique comportant un conduit (13) qui reçoit l'arbre d'entraînement comportant l'axe de rotation (X) et ledit manchon de manivelle comprenant un axe longitudinal qui est décalé radialement de l'axe de rotation (X) de l'arbre d'entraînement (5) pour fournir un décalage de manivelle s'étendant dans une direction radiale entre l'axe longitudinal du manchon de manivelle et l'axe de rotation de l'arbre d'entraînement (5) qui imprime un trajet orbital à la spirale orbitale, ledit manchon de manivelle (4) comprenant en outre un contrepoids formé de façon intégrée (6) pour réduire une vibration de pompe s'étendant radialement dans un sens sensiblement opposé au décalage de manivelle, **caractérisée en ce que** la première partie (7) du manchon de manivelle (4) comporte une surface extérieure accouplée à un chemin de roulement intérieur d'une unité de palier d'éléments de roulement (10), le chemin de roulement extérieur de l'unité de palier (10) étant accouplé à la spirale orbitale, le manchon de manivelle (4) sollicitant l'unité de palier (10) vers la spirale fixe.

2. Pompe à spirales selon la revendication 1, dans laquelle le manchon de manivelle (4) comprend une seconde partie (11), décalée longitudinalement de la première partie (7), qui comprend le contrepoids (6).

3. Pompe à spirales selon la revendication 1 ou la revendication 2, dans laquelle le conduit (13) a une longueur dans la direction longitudinale qui est plus longue que celle de la première partie (7).

4. Pompe à spirales selon l'une quelconque des revendications précédentes, dans laquelle le rapport de la longueur du conduit (13) délimité par la première partie (7) du manchon de manivelle à la longueur totale du conduit s'inscrit entre environ 1:1,3 et environ 1:3, de préférence entre environ 1:1,5 et environ 1:2,5.

5. Pompe à spirales selon l'une quelconque des revendications précédentes, dans laquelle le manchon de manivelle est usiné à partir d'une unique pièce de matériau.

6. Pompe à spirales selon l'une quelconque des revendications précédentes, dans laquelle ledit arbre d'entraînement comprend une fixation non permanente destinée à fixer le manchon de manivelle à l'arbre d'entraînement, ladite fixation non permanente fournissant ladite sollicitation à l'unité de palier (10).
